Europäisches Patentamt

European Patent Office

Office européen des brevets

(19)

(11) Veröffentlichungsnummer: **0 218 265 B1**

# (12) EUROPÄISCHE PATENTSCHRIFT

(45) Veröffentlichungstag der Patentschrift: **16.12.92**

(51) Int. Cl.⁵: **G11B 23/113**

(21) Anmeldenummer: **86114093.7**

(22) Anmeldetag: **10.10.86**

(54) **Vorrichtung für die Ausrichtung und Beschickung von Magnetbandkassetten in eine Zuführungseinrichtung zu einer Maschine zum Bewickeln der Kassetten mit Magnetband.**

(30) Priorität: **11.10.85 IT 2244985**

(43) Veröffentlichungstag der Anmeldung:
**15.04.87 Patentblatt 87/16**

(45) Bekanntmachung des Hinweises auf die
Patenterteilung:
**16.12.92 Patentblatt 92/51**

(84) Benannte Vertragsstaaten:
**AT BE CH DE ES FR GB LI**

(56) Entgegenhaltungen:
**WO-A-82/00026
WO-A-84/01564
US-A- 3 964 100
US-A- 4 377 111
US-A- 4 438 468**

(73) Patentinhaber: **ROBOTECNICA S.r.l.
Via Clerici, 2/4
20099 Sesto San Giovani (MI)(IT)**

(72) Erfinder: **Bosco, Angelo
Via Kennedy, 27
I-20097 San Donato Milanese(IT)**
Erfinder: **Magnaghi, Edgardo
Via Veneto 11/3b San Bovio
I-20068 Peschiera Borromeo(IT)**

(74) Vertreter: **Vogl, Leo, Dipl.-Ing.
AEG Aktiengesellschaft Patent-und Lizenzwesen Theodor-Stern-Kai 1
W-6000 Frankturt am Main 70(DE)**

EP 0 218 265 B1

## Beschreibung

Die vorliegende Erfindung betrifft eine Vorrichtung für die Ausrichtung und Beschickung von Magnetbandkassetten in eine Zuführungseinrichtung zu einer Maschine zum Bewickeln der Kassetten mit Magnetband oder dgl. mit einem Zuführtrichter für Kassetten, die zufällig angeordnet sind, der Vereinzelungsvorrichtungen enthält, Lenkungsvorrichtungen für Kassetten sind unterhalb des Trichters angebracht, weiterhin gibt es Schiebevorrichtungen, um besagte Kassetten zu Lenkungsvorrichtungen zu bringen, und eine Logikeinheit.

Das Problem der Lenkung der Kassetten, die einer Maschine zur Bewicklung mit Magnetband zugeführt werden, ist bekannt.

Dieses Problem erwächst aus der Bedingung, daß die Position der Metallschrauben, die die zwei Gehäusehälften der Kassette verbinden, beim Bewickeln eine bestimmte Lage aufweisen müssen. Aus diesem Grunde ist es notwendig, daß am Eingang einer Maschine zur Befüllung von Kassetten mit Magnetband die Kassetten genau ausgerichtet werden.

Gegenwärtig wird die Arbeit der Beschickung durch einen Trichter bewerkstelligt, der keine besondere Vorrichtung für die Lenkung der Kassette vorsieht und es der Bedienungsperson überläßt, sie präventiv korrekt auszurichten.

Mit diesem System hat man große Zeitverluste, und die Fehlerwahrscheinlichketi bei der Lenkung ist groß. Einige solcher Ausrichtungsvorrichtungen sind bekannt, die zur Zeit am Anfang der Beschickungslaufbänder eingesetzt werden. Sie werden häufig durch mehrere unabhängig arbeitende Stationen ersetzt. Nachteile dieser Lösung ergeben sich dadurch, daß sie nur Gruppen von Maschinen beschicken können und auch aus Kostengründen nicht dafür geeignet sind, eine einzelne Maschine zu beschicken.

Eine Ausrichtvorrichtung nach dem Oberbegriff des Anspruchs 1 ist aus der WO-A-82/00026 bekannt. Dort werden die Kassetten jedoch nicht nach ihrer Vorder- und Rückseite ausgerichtet. Diese Ausrichtung muß dort wie oben beschrieben durch die Bedienungsperson erfolgen. Um die Kassetten mit der Öffnung nach unten zu orientieren, muß eine Hülle, die die Kassetten vorübergehend aufnimmt, soweit gedreht werden, bis die Verdickung an der Vorderseite der Kassette unterhalb von innen in der Hülle angeordneten Führungen zu liegen kommt. Je nach zufälliger Ausrichtung der Kassetten bei der Beschickung tritt dieser Fall bei einem Teil der Kassetten schon bei 90 Grad Drehung ein, bei einem anderen Teil erst bei 270 Grad Drehung. Da die Lage der Kassetten nicht abgetastet wird, muß deshalb immer eine Drehung um 270 Grad gemacht werden, auch wenn die Kassette bei 90 Grad schon herausgefallen ist. Der entsprechende Zeitverbrauch muß in Kauf genommen werden.

Aufgabe der Erfindung ist es, die Nachteile der bekannten Vorrichtungen zu vermeiden. Es soll eine Vorrichtung geschaffen werden, die direkt an eine Maschine zur Befüllung von Magnetband in Kassetten angebracht werden kann und die mit geringsten Zeitverlusten die Kassetten nicht nur mit ihren Öffnungen in eine Richtung ausrichtet, sondern sie auch mit einer bestimmten Seite nach oben orientiert.

Unter Berücksichtigung dieser Aufgabe wurde gemäß der vorliegenden Erfindung eine automatische Vorrichtung für die Lenkung und Beschickung von Magnetbandkassetten realisiert, die dadurch gekennzeichnet ist, daß erste Sensoren an dem Zuführtrichter angebracht sind, daß eine zweite Lenkungsvorrichtung, die die Kassetten in eine zweite Richtung ausrichtet, unterhalb der Vereinzelungsvorrichtung mit zweiten Sensoren angebracht ist, wobei die aus der Vereinzelungsvorrichtung kommenden Kassetten die zweite Lenkungsvorrichtung zugeführt werden, und daß die ersten und zweiten Sensoren die die Lage der Kassetten (11) ertastet, die zwei Lenkungsvorrichtungen und die Schiebevorrichtung operativ mit der Logikeinheit derart verbunden sind, daß die Logikeinheit die Ausrichtung der Kassetten steuert und kontrolliert.

Die Bedienungsperson wird durch diese Maßnahme ganz entlastet, Zeitverluste werden vermieden und Fehlermöglichkeiten ausgeschaltet.

In einer bevorzugten Form der Realisation der vorliegenden Erfindung können besagte Mittel zur Lenkung und Rotation angetrieben, besser sogar mit einem Getriebemotor verbunden sein, und außerdem so ausgebildet sein, daß sie in beide von der Rotationsachse erlaubten Richtungen rotieren.

Die vorliegende Erfindung wird nachfolgend an Hand beiliegender Zeichnungen beschrieben:

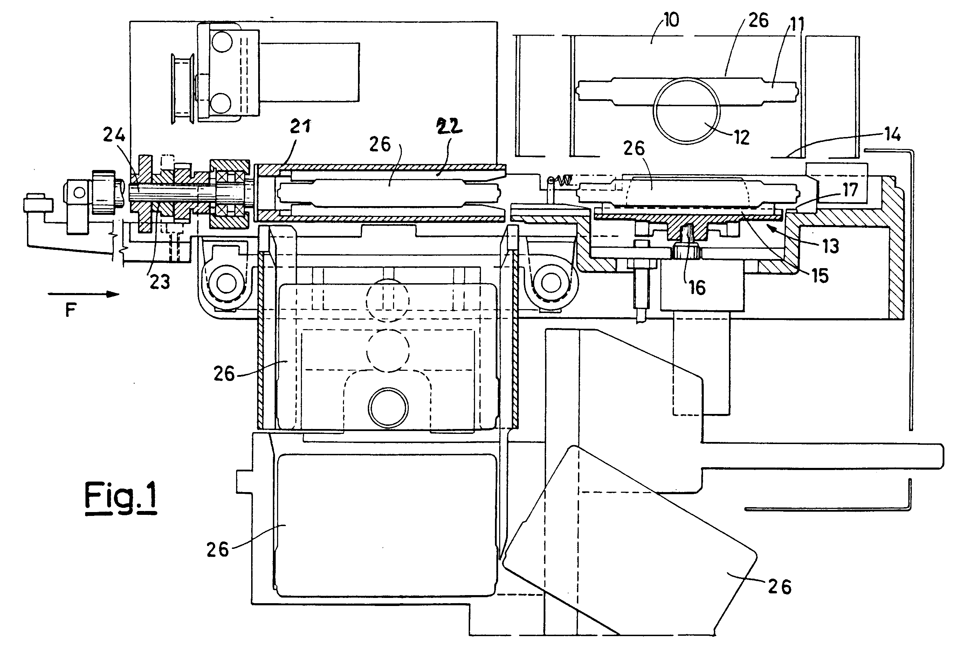

Die Fig.1 ist eine Seitenansicht, teilweise als Schnitt, der Vorrichtung gemäß der Erfindung,

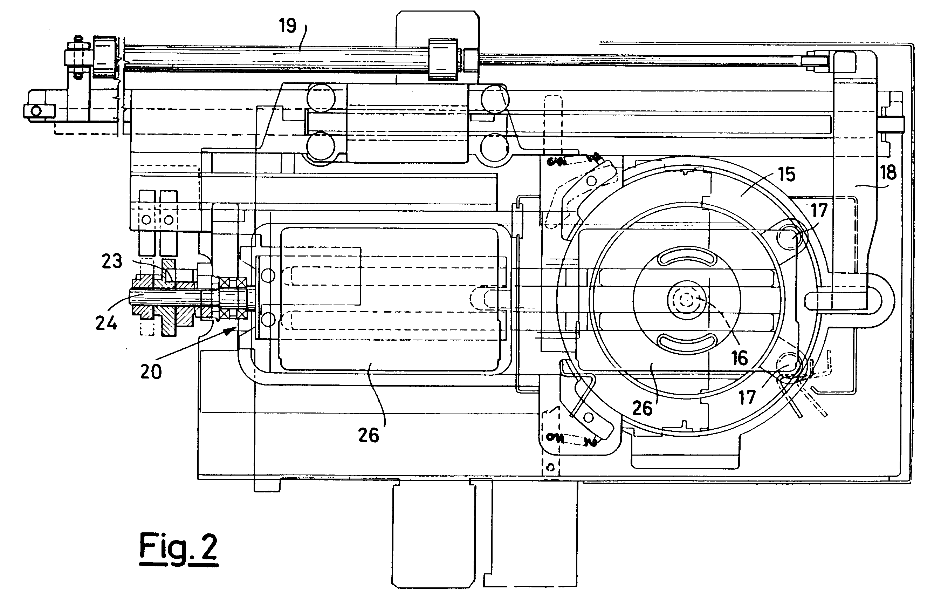

Die Fig.2 ist eine Ansicht im Grundriß der Elemente aus Fig.1,

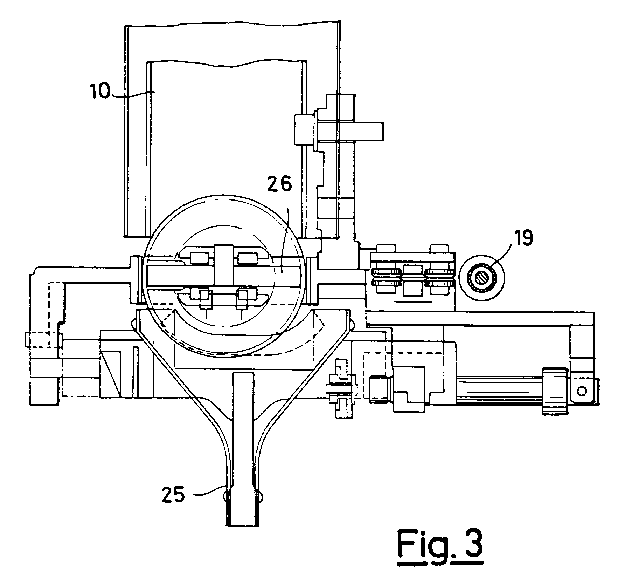

Die Fig.3 ist eine Ansicht gemäß dem Pfeil F der Fig.1.

In der Zeichnung ist mit 10 eine Art Einfülltrichter bezeichnet, in dem eine Kassette 11 läuft, die schematisch gezeichnet sich in Nähe eines Sensors 12 befindet. Während ihres Laufs nach unten wird die Kassette, nachdem sie an einem Sensor 12 vorbeigekommen ist, auf eine erste Lenkungsvorrichtung 13 gebracht mittels eines Vereinzelungsmechanismus 14. Die erste Lenkungsvorrichtung 13 besteht aus einem Teller 15, der mit einer Übertragung 16 gekoppelt ist, und der mit zwei Sensoren 17 ausgerüstet ist, die das Vorhandensein der Schrauben auf der Außenseite der Kassette, die in Kontakt mit dem Teller 15 ist, ertastet.

Außerdem ist an den Teller angrenzend und komplanar zu besagter Kassette eine Schubvorrichtung 18 vorgesehen, die durch einen pneumatischen Zylinder 19 bewegt wird. Der Schieber 18 dient dazu, die Kassette 11 horizontal zu verschieben, nachdem sie richtig orientiert wurde, und zwar in Richtung zweiter Lenkungsvorrichtungen, die in ihrer Gesamtheit mit 20 dargestellt sind, und aus einem "U"-Profilelement 21 bestehen, das innere Vorsprünge 22 aufweist, und mit einer Kraftübertragungswelle 23 verbunden ist. Das Element 21, das um seine Achse 24 drehbar ist, dient dazu, die Kassette auf einen Schlitten 25 zu bringen, der sie zur weiteren Bearbeitung schickt.

Während eines normalen Arbeitszyklus einer Maschine für das Befüllen von Kassetten mit Magnetband, können diese rein zufällig beschickt werden, und dann eine Vorrichtung, wie sie in der vorliegenden Erfindung geschildert wird, passieren.

Die in 11 schematisch dargestellte Kassette läuft im Trichter 10 bis vor den Sensor 12, der dazu dient, herauszufinden, auf welcher Seite der Kassette sich die Öffnung befindet. Sukzessive werden nun die den Trichter hinunterlaufenden Kassetten eine nach der anderen mittels des Vereinzelungsmechanismus 14 entladen.

Einmal auf dem Teller 15 der Lenkungsvorrichtung 13 angekommen, sorgen die Sensoren 17 für das Ertasten der Schrauben auf der Oberfläche der Kassette 11, die auf dem Teller 15 aufliegt.

Diese letzte Information, zusammen mit der des Sensors 12, wird von einer Logikeinheit 26 für Kontrolle und Steuerung gelesen und verarbeitet, die sowohl mit dem Sensor 12, als auch mit den Sensoren 17 verbunden ist.

Wenn die Einheit 26 die Lage der Kassette in Funktion der von den Sensoren empfangenen Information und in Funktion der Bewegungsmöglichkeiten des Tellers 15 und des Elements 21 eindeutig festgestellt hat, liefert sie an die Übertragungswellen 16 und 23 den Befehl zu rotieren. In besonderen Positionen einer Kassette 11 kann der Teller 15 auch unbeweglich bleiben, während das Element 21 normalerweise sich nur in eine Richtung dreht.

Auf diese Weise vereinfachen sich die Informationen, die die Logikeinheit analysieren muß, und es ergeben sich weniger Bewegungsmöglichkeiten zwischen den Bestandteilen der Vorrichtung gemäß der Erfindung.

Es ist klar, daß dies nur ein Beispiel aus allen Kombinationsmöglichkeiten zwischen annehmbaren Stellungen einer Kassette und Drehrichtung der Lenkungsvorrichtung darstellt.

Ist die Ausrichtungsphase der Kassette auf dem Teller (der sich drehen kann oder nicht) 15 beendet, läuft die Kassette mittels Schieber in das "U"-Element 21 und wird von ihm durch Zähne 22 gehalten, während eines Teils ihrer Rotationsbewegung.

Wie bereits gesagt wurde, befördern die Zähne 22, unter Ausnutzung der dickeren Seite der Kassette und durch die Ausrichtung der Kassette selbst im Element 21, die Kassette in einer Rotationsbewegung von 90° oder 180°, wonach sie auf einen Schlitten 25 gelegt wird, der sie richtig ausgerichtet der Bandlademaschine zuführt.

## Patentansprüche

1. Vorrichtung für die Ausrichtung und Beschickung von Magnetbandkassetten (11) in eine Zuführungseinrichtung zu einer Maschinen zum Bewickeln der Kassetten (11) mit Magnetband oder dgl. mit folgenden Vorrichtungsteilen: einem Zuführtrichter (10) für Kassetten (11), in dem die Kassetten (11) zufällig angeordnet sind, eine Vereinzelungsvorrichtung (14), die unterhalb des Zuführtrichters (10) angebracht ist, eine erste Lenkungsvorrichtung (20), die die Kassetten (11) in eine erste Richtung ausrichtet, eine Schiebevorrichtung (18), um besagte Kassetten (11) zur ersten Lenkungsvorrichtung (20) zu bringen und eine Logikeinheit, **dadurch gekennzeichnet, daß** erste Sensoren (12) an dem Zuführtrichter (10) angebracht sind, daß eine zweite Lenkungsvorrichtung (13), die die Kassetten (11) in eine zweite Richtung ausrichtet, unterhalb der Vereinzelungsvorrichtung (14) mit zweiten Sensoren (17) angebracht ist, wobei die aus der Vereinzelungsvorrichtung (14) kommenden Kassetten (11) der zweiten Lenkungsvorrichtung (13) zugeführt werden, und daß die ersten und zweiten Sensoren (12, 17), die die Lage der Kassetten (11) ertasten, die zwei Lenkungsvorrichtungen (13, 20) und die Schiebevorrichtung (18) operativ mit der Logikeinheit derart verbunden sind, daß die Logikeinheit die Ausrichtung der Kassetten (11) steuert und kontrolliert.

2. Vorrichtung nach Anspruch 1, dadurch gekennzeichnet, daß besagte erste und zweite Sensoren (12, 17) aus Nähetastern bestehen, die die Anwesenheit von Metall fühlen.

3. Vorrichtung nach einem der Ansprüche 1 oder 2, dadurch gekennzeichnet, daß die unterhalb der Vereinzelungsvorrichtung (14) angebrachte Lenkungsvorrichtung (13) aus einem drehbaren Teller (15) besteht, der an eine Übertragungswelle (16) angeschlossen ist und mit mindestens zwei Sensoren (17) ausgestattet ist.

4. Vorrichtung nach einem der Ansprüche 1 bis 3, dadurch gekennzeichnet, daß die Schiebevorrichtung einen Schieber (18) enthält, der durch einen pneumatischen Zylinder (19) bewegt wird.

5. Vorichtung nach einem der Ansprüche 1 bis 3, dadurch gekennzeichnet, daß die unterhalb der Vereinzelungsvorichtung (14) angebrachte Lenkungsvorichtung (20) aus einem U-Profilelement (21) besteht, das an der Innenseite über Zähne (22) verfügt und mit einer Übertragungswelle (23) verbunden ist.

6. Vorrichtung nach einem der Ansprüche 1 bis 5, dadurch gekennzeichnet, daß die zwei Lenkungsvorichtungen (13, 20) in beiden Drehrichtungen rotieren können.

## Claims

1. Device for the aligning and charging of magnetic tape cassettes (11) in a feed equipment to a machine for the loading of the cassettes (11) with magnetic tape or the like, with the following device parts: a feed hopper (10) for cassettes (11), in which the cassettes (11) are arranged randomly, a singling device (14), which is mounted below the feed hopper (10), a first drive device (20), which aligns the cassettes (11) in a first direction, a slide device (18) in order to bring said cassettes (11) to the first drive device (20), and a logic unit, characterised thereby, that first sensors (12) are mounted at the feed hopper (10), that a second drive device (13), which aligns the cassettes (11) in a second direction, with second sensors (17) is mounted below the singling device (14), wherein the cassettes (11) coming out of the singling device (14) are fed to the second drive device (13), and that the first and second sensors (12, 17), which sense the position of the cassettes (11), the two drive devices (13, 20) and the slide device (18) are operatively connected with the logic unit in the manner that the logic unit controls and checks the alignment of the cassettes (11).

2. Device according to claim 1, characterised thereby, that said first and second sensors (12, 17) consist of proximity detectors, which sense the presence of metal.

3. Device according to one of the claims 1 or 2, characterised thereby, that the drive device (13) mounted below the singling device (14) consists of a rotatable plate (15), which is connected to a transmission shaft (16) and is equipped with at least two sensors (17).

4. Device according to one of the claims 1 to 3, characterised thereby, that the slide device comprises a slide (18), which is moved by a pneumatic cylinder (19).

5. Device according to one of the claims 1 to 3, characterised thereby, that the drive device (20) mounted below the singling device (14) consists of a U-shaped element (21), which has teeth (22) at the inner side and is connected with a transmission shaft (23).

6. Device according to one of the claims 1 to 5, characterised thereby, that the two drive devices (13, 20) can rotate in both rotational directions.

## Revendications

1. Appareil destiné à orienter et à charger des cassettes de bande magnétique (11) dans un dispositif d'amenée alimentant une machine servant à garnir les cassettes (11) d'une bande magnétique, ou machine équivalente, comprenant une trémie d'amenée (10) pour les cassettes (11), dans laquelle les cassettes (11) sont disposées au hasard, qui renferme des dispositifs d'individualisation (14), et comprenant aussi des dispositifs de retournement des cassettes disposés au-dessus de la trémie d'amenée (10), qui orientent les cassettes (11) dans une première direction, un premier dispositif de retournement (20), un dispositif de translation (18) servant à introduire les cassettes précitées (11) dans le premier dispositif de retournement (20), et une unité logique, caractérisé en ce que des premiers capteurs (12) sont agencés au droit de la trémie d'amenée (10), en ce qu'un second dispositif de retournement (13), qui oriente les cassettes (11) dans une seconde direction, est disposé au-dessous du dispositif d'individualisation (14), avec des seconds capteurs (17), les cassettes (11) provenant du dispositif d'individualisation (14) étant amenées au second dispositif de retournement (13) et en ce que les premiers et seconds capteurs (12, 17), qui détectent la position des cassettes (11), les deux dispositifs de retournement (13, 20) et le dispositif de translation (18) sont reliés fonctionnellement à l'unité logique de telle manière que l'unité logique commande et contrôle l'orientation des cassettes (11).

2. Appareil selon la revendication 1, caractérisé en ce que lesdits premier et seconds capteurs (12, 17) sont constitués par des détecteurs de proximité qui détectent la présence de métal.

**3.** Appareil selon une des revendications 1 et 2, caractérisé en ce que le dispositif de retournement (13) disposé au-dessous du dispositif d'individualisation (14) est composé d'un plateau tournant (15) qui est raccordé à un arbre de transmission (16) et est équipé d'au moins deux capteurs (17).

**4.** Appareil selon une des revendications 1 à 3, caractérisé en ce que le dispositif de translation comprend un poussoir (18) qui est mis en mouvement par un vérin pneumatique (19).

**5.** Appareil selon une des revendications 1 à 3, caractérisé en ce que le dispositif de retournement (20) disposé au-dessous du dispositif d'individualisation (14) est composé d'un élément profilé en U (21) qui possède des dents (22) sur sa face intérieure et est relié à un arbre de transmission (23).

**6.** Appareil selon une des revendications 1 à 5, caractérisé en ce que les deux dispositifs de retournement (13, 20) peuvent tourner dans les deux sens de rotation.

Fig.1

Fig.2

EP 0 218 265 B1

Fig. 3